# EUROPEAN PATENT APPLICATION

(11) **EP 0 705 743 A1**
(43) Date of publication of application: **10.04.1996**
(21) Application number: 95115144.8
(22) Date of filing: 26.09.1995
(51) Int. Cl.: B60R 25/02

(54) **Burglar proof device for vehicles**

(30) Priority: 04.10.1994 IL 11115694
(71) Applicant: Sason, Ezra, Tel-Aviv (IL); Sason, Shimon, Tel-Aviv (IL); Cohen, Yoram, Tel-Aviv 67133 (IL); Bar-Nur, Barak, Tel-Aviv 67133 (IL)
(72) Inventor: Sason, Ezra, Tel-Aviv (IL); Sason, Shiman, Tel-Aviv (IL)
(74) Representative: Grünecker, Kinkeldey, Stockmair & Schwanhäusser Anwaltssozietät

(57) **Abstract**

In order to prevent car thefts, the car's steering wheel column includes a transmission mechanism, causing the wheels to disengage from or to connect with the steering wheel. When the car is parked, the transmission mechanism is "disengaged" and can be changed to the "connected" position only by using a key.

## Description

The most widespread means of protection against car theft is the locking of the steering wheel, while disconnecting the ignition system by the switch key.

Locking the steering wheel is accomplished by a small tongue which prevents turning it by unauthorized persons. This does not constitute a real obstacle since a forceful turning of the steering wheel will break the small tongue meant to prevent the turning. The device proposed hereby is a conceptual change from the existing mechanism; its uniqueness is in that the steering system is disconnected from the wheels during the entire time the car is parked.

The proposed device reconnects the system for driving by authorized persons only.

The potential burglar who reconnects the ignition system finds that he is unable to drive the car since the steering wheel rotates in his hands freely, without any connection to the wheels. Contrary to the customary prevention devices, the use of violent force on the steering wheel with the new device will not achieve any change in the blocking system.

With the help of Fig. 1 to 7 we will describe the mechanical solution illustrating the above principle.

Naturally, this particular description does not diminish the universality of the invention.

Fig. 1 presents the general view of the steering wheel with the proposed device installed.

Fig. 2 gives us an enlarged exterior view of the device.

Fig. 3 is a cross-section of the device, which allows viewing the details of the interconnecting transmission mechanism.

Fig. 4 is an additional cross-section through the transmission parts.

Fig 5 shows section A - A, perpendicular to the axis of the steering wheel.

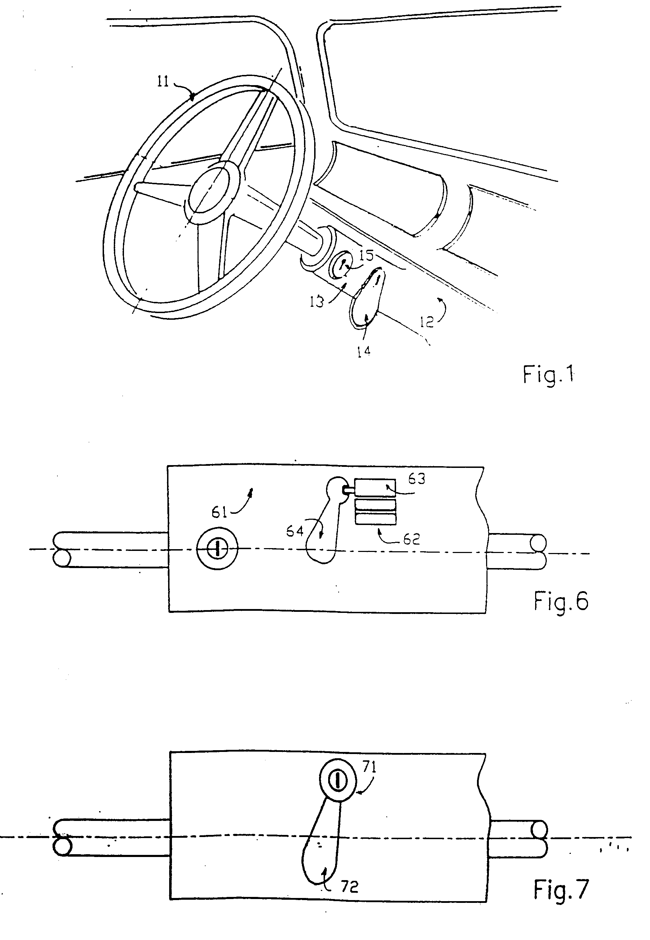

Through the use of Fig. 1, the parts of the device are described below:

The car's steering wheel 11 passes through the device 12 which includes an outer box 13, operation handle 14 and the usual slot for the ignition key 15.

As mentioned, when the car is parked the steering wheel is disconnected from the wheels. In order to reconnect the steering wheel 11 the operation handle 24 must be turned.

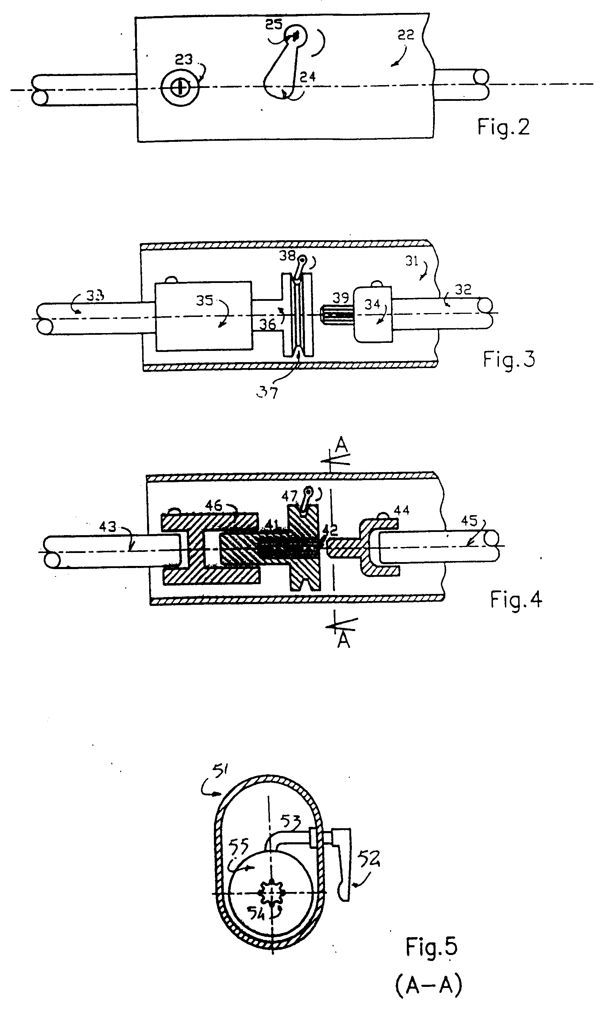

In Fig. 3 the front part of the device box 31 is removed. The steering wheel column is divided into two parts: one of them 32 is connected to the wheels, the other one 33 is connected to the steering wheel. The transmission head 34 with exterior teeth 39 is installed on the part connected to the wheels 32; the sliding bushing 36, with the inner sliding part 36, is installed on the part connected to the steering wheel, on the same axis line. This sliding part 36 has a rotating structure and a circumferential groove 37. In this groove there is an axial arm 38 which can move the sliding part 36 forwards and backwards along the symmetry axis of the system, and thus to engage or disengage the transmission. The turning of this arm is done by the operation arm 24, described in Fig. 2, to which it is directly connected.

In Fig. 4 the cross-section of the transmission parts is presented; the sliding part 41 contains the interior teeth 42, which match the exterior teeth 39 described in Fig. 3. This part 41 can slide in the bushing 46 which is connected to the steering wheel column 43, but cannot rotate around it (square section). The sketch shows also the transmission head 44 connected to the steering wheel column 45 which is connected to the wheels. The connection of the transmission head 44 with the sliding part is achieved by rotating the axial arm 47.

Section A - A, perpendicular to the axis of the device, is shown in Fig. 5. The housing of the device 51, the operation handle 52 connected directly to the axial arm 53, as well as the set of interior teeth 54 which is in the center of the sliding part 53 can be seen.

As mentioned, locking the operation handle 25 (Fig. 2) is accomplished by using an inner lock, similar to those used for storage lockers and safes. Instead of a key fitting this lock, an electronic box can be attached and a magnetic or electro-optic tape with a suitable secret code can be used for operating the device.

The box 61 which combines a magnetic reader 62 connected to the solenoid 63 is described in Fig. 6. Activating the solenoid will close the operation handle 64 preventing turning.

Fig. 7 is the plan of the operation switch of the car 71 connected to the operation handle 72. While this part of the plan must be done by the car's manufacturer, all other parts and devices described above can be installed in existing cars by any trained and qualified person.

## Claims

1. A device to avoid car thefts, which is installed on the car's steering wheel column (32,33) and includes a transmission mechanism (41,42,44,46) causing the wheels to disengage from or to connect with the steering wheel (11), as well as locking mechanisms connected with this transmission; when the car is parked the transmission mechanism is "disengaged"; to start the car anew, the transmission system can be changed to the "connected" position only by using a key which fits the above means of locking.

2. A device as described in claim 1, but the locking is accomplished by a solenoid with a steel tongue and is operated by a magnetic or electro-optic card with a suitable electronic reader.

3. A device as described in claim 1, but the release or disengagement is achieved by the car's ignition key.
